# EUROPEAN PATENT APPLICATION

(11) **EP 2 824 945 A1**
(43) Date of publication of application: **14.01.2015**
(21) Application number: 13305991.5
(22) Date of filing: 11.07.2013
(51) Int. Cl.: H04W 4/00, H04W 8/02

(54) **Sim proxy module for roaming in a mobile network**

(71) Applicant: ALCATEL LUCENT, 92100 Boulogne-Billancourt (FR)
(72) Inventor: EL Mghazli, Yacine, 91620 Nozay (FR); Marce, Olivier, 91620 Nozay (FR)
(74) Representative: 2SPL Patentanwälte PartG mbB

(57) **Abstract**

A mobile device (**100**) comprising:
- a first modem (**101**) associated to a first SIM card (**104**), the first modem (**101**) being configured to establish a roaming session within a visited mobile network (**107**) based on identification information of the first SIM card (**104**);
- a second modem (**102**) associated to a SIM proxy module (**106**), the SIM proxy module (**106**) being configured to retrieve identification information from a remote second SIM card through a roaming session established by the first modem (**101**), the remote second SIM card being provisioned with a local subscription to at least a visited mobile network (1**0**7), the second modem (**102**) being configured to establish a local session within the at least visited mobile network based on the retrieved identification information of the remote second SIM card.

## Description

### FIELD OF THE INVENTION

The present invention relates to the technical field of M2M (Machine-to-Machine) connectivity, and particularly to M2M SIM cards management when performing roaming.

### BACKGROUND OF THE INVENTION

The term "M2M" means here broadly and not restrictively to include any device comprising means configured to connect to other remote connected devices (i.e. cameras, servers) through a mobile network.

An M2M device comprises, generally, more than one Subscriber Identity Module (SIM) card that contains the credentials used to authenticate the device. A SIM card is linked to an existing contract/subscription with a Mobile Network Operator (MNO). When a user is roaming (i.e. is in a visited mobile network), the MNO associated to his SIM card needs to cooperate with other roaming MNOs in order to provide a global connectivity. Global connectivity means here connectivity to MNO, which is still provided to a device even during roaming. Accordingly, high roaming charges are applied if a same SIM card is used abroad. For this reason, M2M devices are generally using multiple SIM cards in order to work in several countries or areas.

As an example, a M2M device may be a video camera embedding multiple 3G modems. For such a device, it is possible to embed up to 10 3G modems with respective SIM cards, permitting to connect the video camera in several countries and to use several networks simultaneously for providing high data bandwidth. Such video cameras are typically used by TV channels and, consequently, the use of 100 devices of these kinds implies to provision up to 1000 SIM cards. Moreover, the SIM cards must be chosen by anticipating the countries where they will be connected.

Such a situation implies that the M2M owners need to register several contracts with several MNOs. However, it is technically impossible to cover all possible roaming scenarios with a limited number of SIM cards comprising SIM credentials. Moreover, it is really complex and expensive, since it implies high charges to maintain subscription with MNOs, even if they are not always actually used. Solutions consisting to use a "multiple-in-one" SIM card, where the SIM card can reboot and act as another SIM on demand, would not be efficient since it involves the same MNO cost problems and limitations of SIM provisioned cases.

Accordingly, one technical problem to solve is how to provide a global mobile connectivity to a M2M device, without having to manage a set of SIM cards for each device, and without supporting roaming charges.

A possible solution to solve this problem would be to take advantage of the eUICC (embedded Universal Integrated Circuit Card) technology. The principle of eUICC consists in replacing a physical SIM card by a chipset soldered on the device motherboard. Such a technology provides a valid architecture to re-personalize a SIM card, and may be provisioned with one or several telecom profiles, depending on the local needs of the device owners at a given time. Nevertheless, eUICC technology will not be available before several years, and requires specific SIM cards and international agreements between operators to work correctly. Indeed, MNOs are not supporting this technology which dematerialize the SIM card, which is currently a physical link between the MNO and the user. Accordingly it is not possible to leverage eUICC technology at mid-term.

One object of the present invention is to provide a solution to the aforementioned problems, and to offer other advantages over the prior art.

Another object of the present invention is to provide global mobile connectivity to M2M devices, without M2M owners having to manage a set of SIM cards associated to their device.

Another object of the present invention is to minimize the connectivity costs involved by MNOs when roaming.

Yet another object of the present invention is to propose a remote authentication method for M2M devices.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to a mobile device comprising:
- a first modem associated to a first SIM card, the first modem being configured to establish a roaming session within a visited mobile network based on identification information of the first SIM card;
- a second modem associated to a SIM proxy module, the SIM proxy module being configured to retrieve identification information from a remote second SIM card through a roaming session established by the first modem, the remote second SIM card being provisioned with a local subscription to at least a visited mobile network, the second modem being configured to establish a local session within the at least visited mobile network based on the retrieved identification information of the remote second SIM card.

In accordance with one broad aspect, the first modem is further configured to release the roaming session, once the second modem establish the local session within the at least visited mobile network.

Further, various embodiments relate to a method for establishing a local session between a mobile device and a visited mobile network, the method comprising the following steps
- establishing a roaming session within a visited mobile network with a first modem associated to a first SIM card based on identification information of the first SIM card;
- retrieving with a proxy module identification information from a remote second SIM card through a roaming session established by the first modem, the remote second SIM card being provisioned with a local subscription to at least a visited mobile network;
- establishing a local session within the at least visited mobile network with a second modem associated to the SIM proxy module based on the retrieved identification information of the remote second SIM card.

In accordance with one broad aspect, the method further comprises a releasing step of the roaming session by the first modem, once the second modem establish the local session within the at least visited mobile network.

Various embodiments further relate to computer program products for performing the above method.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

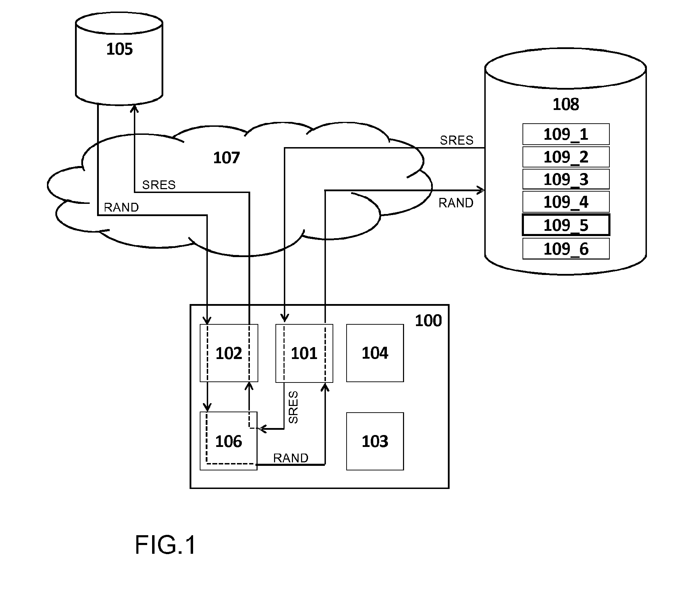

The objects, advantages and other features of various embodiments will become more apparent from the following disclosure and claims. The following non-restrictive description of preferred embodiments is given for the purpose of exemplification only with reference to the accompanying drawing in which Figure 1 is a schematic diagram illustrating functional components according to various embodiments.

### DETAILED DESCRIPTION OF ILLUSTRATIVE EMBODIMENTS

With reference to Figure 1, in one embodiment a M2M device **100** comprising communicating means, realized with hardware (modems, SIM cards) and/or software (interfaces, drivers) means. The device **100** includes a first data modem **101,** and a second data modem **102.** Additionally, the device **100** may further comprise other modules, such as a Wife modem **103.**

In one embodiment, the first modem **101** is associated with a valid (i.e. with required subscriptions) SIM card **104** from a reliable mobile network **107** of an MNO, provisioned with roaming agreement in all countries. The subscription of the SIM card **104** guarantees an initial (i.e. default) connectivity of the device **100** to any mobile network wherever, thanks to the first modem **101** associated to this SIM card. The second modem **102** is not associated with a SIM card so as to provide a connectivity to a subscribed MNO. Any device **100** may be manufactured using this model, with of course distinct SIM cards **104** for each device **100,** ensuring a default global connectivity to MNO networks via each first modem **101.** By global connectivity is meant here connectivity to MNO, which is still provided to the device **100** even during roaming.

SIM card stores network-specific information used to authenticate and identify subscribers on a mobile network **107** such as IMSI (International Mobile Subscriber Identity) designed in this document as "ID information", and a security/authentication key designed as Ki. The ID information and the Ki key are stored too, in an Authentication Center (AUC), generally comprised in a Home Location Register (HLR) **105** of a mobile network **107,** which uses ID and Ki information to identify the subscribers.

Conventionally (not shown in Figure 1), when the device **100** wants to connect (i.e. request/establish a session) to a mobile network **107** of a given MNO, an attach procedure is initiated by the first modem **101** which communicates the ID of its SIM card **104** to the mobile network **107.** The ID of the SIM card **104** designed herein as first SIM card is referred as ID1. The MNO HLR **105** of the mobile network **107** uses the ID1 information of the first SIM card **104** to identify a corresponding authentication key Ki, and uses the Ki on a random chain to generate an encrypted message. This message is referred herein as a "RAND" or challenge message, and is sent to the first modem **101,** to authenticate the SIM card **104** using ID1. The first modem **101** communicates locally with the first SIM card **104** through a standardized interface. The first SIM card **104** (supposed herein to be valid), uses its own Ki to compute a corresponding security response "SRES" message, in response to the challenge/RAND message.

The security response SRES message is transmitted by the first modem **101** to the mobile network **107** and verified by its HLR **105.** The verification for instance, may be performed by comparing the security response "SRES" message computed by the SIM card **104,** with another security response SRES message computed by the HLR, with the help of the same Ki used when generating the RAND challenge message. When the first SIM card **104** is valid, the security response SRES is supposed to be validated by the HLR **105** and the session is finally established.

Consequently, even when roaming in a visited mobile network **107,** the device **100** is always connected as a first step to the mobile network **107** thanks to the first modem **101** via a session, presenting identification information ID1 of the first SIM card **104.**

In a preferred embodiment, with referring to Figure 1, the device **100** further comprises a SIM proxy module **106.** The SIM proxy module **106** may be any applicative/software module, comprising an interface at least to communicate with/and use the connectivity of the first modem **101** and the second modem **102.** Hence, the SIM proxy module **106** is configured to use the data connectivity of the device **100.** One object of the SIM proxy module **106** is to "replace" a real SIM card. In fact, from the second modem **102** side (supposed to have no associated SIM card), the SIM proxy module **106** is viewed as a real second SIM card, since this module is configured to retrieve/transfer/forward valid information of a second SIM card, such as ID information or responses computed with a Ki encryption key. From, the first modem **101** side, the SIM proxy module **106** can be perceived as an interface of any software application.

When roaming (i.e. within a visited mobile network **107** among one or a plurality of available visited mobile network(s) **107_1 ...107_n** with n≥1, these references being not shown in figure 1), a roaming session is established by the device **100** with the visited mobile network **107** through the first modem **101.** Once the roaming session has been established, the device **100** tries to connect to the visited mobile network **107** with the second modem **102** as a local device (i.e. as in a home network with a local session), local session permitting to be free from roaming charges. To do so, the second modem **102** needs to communicate a local MNO ID from a second valid SIM card, designed herein as ID2. The SIM proxy module **106** is in charge to transfer/forward this information to the second modem **102.** To retrieve the ID2, information concerning the available visited mobile networks such as name, MCC (Mobile Country Code) and MNC (Mobile Network Code) of the mobile networks (including **107),** are first transmitted to a remote central SIM database **108,** during a request of the SIM proxy module **106** through the already established roaming session. The remote central SIM database **108** comprises a pool of n SIM cards **109_1,..., 109_n** with n≥1, for instance plugged in a rack (as an illustrative example n=6 in Figure 1). Each SIM card is pre-associated to a local MNO subscription (i.e. a subscription in a home mobile network). The set of SIM cards may includes distinct (or not) MNOs. The central SIM database **108** may be managed for example, by the device **100** manufacturer and the remote SIM cards may be used by several different devices **100** (not the same SIM card at the same time). In fact, the central SIM database **108** permits to remotely provide any required information concerning a valid SIM card to the SIM proxy module **106,** and more generally to remotely allocate a given authentication to a given device on demand. Information concerning the available visited mobile networks are used to choose in the SIM central database **108,** a SIM card comprising a valid local subscription (SIM card **109_5** for instance in Figure 1) to a mobile network, here the mobile network **107.** Once this SIM card has been selected, it is still further used during all the procedure. The selected SIM card is herein referred as the "second SIM card". The ID2 of the (remote) second SIM card, is returned/transmitted over the roaming session, to the SIM proxy module **106** through the first modem **101.** The SIM proxy module **106** transfers/forwards this retrieved information to the second modem **102** to request to the mobile network **107** a local session, presenting the ID2, hence performing a request as a local mobile. During the establishment of the local session, the roaming session is still kept active. As usual authentication procedure, the MNO HLR **105** of the mobile network **107** uses the ID2 information, to authenticate the remote second SIM card using ID2, and uses its corresponding Ki key to generate a challenge/RAND message, which is transmitted to the second modem **102.**

As explained above, the SIM proxy module **106** is perceived as a real second SIM card from the second modem **102** side. Hence, following the reception of the challenge/RAND message, the second modem **102** transfers/forwards this message to the SIM proxy module **106,** to compute a valid response, in order to validate the local session. To retrieve a valid security response SRES message, the SIM proxy module **106** transmits this information to the central SIM database **108,** through the first modem **101** using the roaming session. The second valid SIM card, in the remote central SIM database **108,** already selected, uses its own Ki key to compute the corresponding security response SRES message, in response to the transmitted challenge/RAND message. The computed security response SRES message is then returned from the central SIM database **108** to the first modem **101.** The first modem **101** transfers/forwards the security response SRES message to the SIM proxy module **106,** which uses the second modem **102** to send/transmit the retrieved security response SRES message, to the MNO HLR **105.** Consequently, after the validation of the response by the HLR **105,** the authentication procedure is completed and the device **100,** is using a local session via a remote second SIM card with ID2, and connected as a local mobile through the second modem **102.** Once the second modem **102** has established the local session with the visited mobile network **107,** the roaming session established by the first modem **101** is finally released by the first modem **101** (i.e. goes to idle mode). As a result, the device **100** is connected to the mobile network **107** thanks to the second modem **102** and roaming charges are still not supported. The device **100** can use then, its connectivity to perform usual function (ex: data transfers) or stay in idle mode. In fact, the device **100** does not need to repeat this procedure unless it reboots.

In one embodiment, if for any reason the first modem **101** is paged, the roaming session goes active normally. Moreover, if for any reason the second modem **102** is paged and needs to authenticate again, the roaming session of the first modem **101** is reopened and the procedure is performed again to retrieve the local session with the second modem **102.** In one embodiment, an encryption key Kc can be computed at the same time as the SRES response, by the valid second SIM card in the central SIM database **108.** To do so, information may be additionally transmitted with the challenge/RAND message, to the central SIM database **108** by the SIM proxy module **106** through the roaming session initiated by the first modem **101,** and used to compute the Kc key. As an example, such information may be a real-time parameter referring to the mobile network **107.** The encryption key Kc can be further used, to encrypt the messages that will be exchanged between the second modem **102** and the mobile network **107,** once the local authentication procedure has been performed. This Kc key is only known from the network and from the device **100.** The remote second SIM card chosen in the central SIM database **108,** computes the SRES response message and the Kc key, and both are returned to first modem **101.** The first modem **101** will use the Kc key, to respectively authenticate itself (using SRES message according to the previous described embodiments) and encrypt/decrypt the data from/to the network (using the Kc key).

It is to be noted that it may be more than one available visited mobile networks **107** (designated herein as **107_1, 107_2** and **107_3,** these references being not shown in Figure 1), so that the roaming session involving the first modem **101** is established within a first available visited mobile network while the local session involving the modem **102** and the SIM proxy module **106** is established within another available visited mobile network. For instance, when roaming the device **100** may be under the coverage of the visited mobile networks **107_1, 107_2** and **107_3,** provided by distinct MNOs. The device **100** establishes a roaming session with the visited mobile network **107_1** and then requests a local session with any of the available mobile networks **107_1, 107_2** and **107_3.** Information (such as MCC and MNC) of all available mobile networks is transmitted to the central SIM database **108,** and a remote SIM card is chosen with considering these transmitted information. As a result, a SIM card of a distinct MNO from the first one providing the roaming session, may be chosen. For instance the remote SIM card may be associated to the mobile network **107_3.** In this case, the device **100** would be finally connected as a local mobile to the mobile network **107_3.**

In one embodiment, the device **100** may further comprise more than one modem with no associated SIM card: the said modems are associated to the proxy module **106.** This permits to provide high data bandwidth when roaming, with establishing several local sessions (possibly with different local MNOs) with distinct SIM cards from the central SIM database **108.** To establish the local sessions, the same procedure as described in the previous embodiments may successively be performed.

Advantageously, the above described embodiments permit to decrease user roaming costs. In fact, roaming costs are only assumed during the roaming session, and ends in the end of the establishment of the local session. When the local session is established, the device **100** is seen from the mobile network **107** as a local device, even when roaming. In fact, when the HLR **105** receive the security response SRES from the SIM proxy module **106** through the second modem **102,** it does not know that this response has been remotely computed by a remote SIM card, in the central SIM database **108.**

Advantageously, the device **100,** comprising a first modem **101** for a default connectivity and a second modem **102** linked to the SIM proxy module **106** does not require any further hardware modifications. Thanks to the proxy module **106** and to the remote central SIM database **108,** there is only one "real" SIM card in the device **100,** and there is still no need to change of SIM cards when roaming.

Advantageously, if the remote SIM cards in the central SIM database **108** are correctly planned, it can be sufficient to register a couple of subscriptions for a given MNO and to allocate them on demand, whereas in the background art each device needed a subscription to the MNO even if it was not used.

Advantageously, this solution provides a valid and flexible solution to M2M manufacturer that need to manage the connectivity of their devices. The fact to provide a remote local connectivity to a MNO network permits to optimize costs for the transmission of high volume of data.

## Claims

1. A mobile device **(100)** comprising:
- a first modem **(101)** associated to a first SIM card **(104),** the first modem **(101)** being configured to establish a roaming session within a visited mobile network **(107)** based on identification information of the first SIM card **(104);**
- a second modem **(102)** associated to a SIM proxy module **(106),** the SIM proxy module **(106)** being configured to retrieve identification information from a remote second SIM card through a roaming session established by the first modem **(101),** the remote second SIM card being provisioned with a local subscription to at least a visited mobile network, the second modem **(102)** being configured to establish a local session within the at least visited mobile network based on the retrieved identification information of the remote second SIM card.

2. The mobile device **(100)** of claim 1, wherein the first modem **(101)** is further configured to release the roaming session, once the second modem **(102)** establish the local session within the at least visited mobile network.

3. The mobile device **(100)** of claim 1 or 2, wherein the second modem **(102)** is further configured to transfer a challenge message from the at least visited mobile network to the SIM proxy module **(106),** to authenticate the remote second SIM card during the establishment of the local session.

4. The mobile device **(100)** of any of the preceding claims, wherein the SIM proxy module **(106)** is further configured to transmit through the roaming session established by the first modem **(101),** the challenge message from the at least visited mobile network to the remote second SIM card within a central SIM database **(108).**

5. The mobile device **(100)** of any of the preceding claims, wherein the first modem **(101)** is further configured to transfer a security response message from the central SIM database **(108)** to the SIM proxy module **(106),** the message being computed by the remote second SIM card within the central SIM database **(108),** in response to the transmitted challenge message.

6. The mobile device **(100)** of any of the preceding claims, wherein the SIM proxy module **(106)** is further configured to transmit through the second modem **(102),** the computed security response message to the at least visited mobile network in order to validate the local session.

7. The mobile device **(100)** of any of the preceding claims, wherein the SIM proxy module **(106)** is further configured to transmit through the roaming session established by the first modem **(101),** a network information with the challenge message to the remote second SIM card in the central SIM database **(108)** to compute an encryption key.

8. The mobile device **(100)** of any of the preceding claim, wherein the SIM proxy module **(106)** is further configured to transmit through the second modem **(102),** the computed encryption key with the security response message to the at least visited mobile network.

9. A method for establishing a local session between a mobile device **(100)** and a visited mobile network, the method comprising the following steps
- establishing a roaming session within a visited mobile network **(107)** with a first modem **(101)** associated to a first SIM card **(104)** based on identification information of the first SIM card **(104);**
- retrieving with a proxy module **(106)** identification information from a remote second SIM card through a roaming session established by the first modem **(101),** the remote second SIM card being provisioned with a local subscription to at least a visited mobile network;
- establishing a local session within the at least visited mobile network with a second modem **(102)** associated to the SIM proxy module **(106)** based on the retrieved identification information of the remote second SIM card.

10. The method of claim 9, further comprising a releasing step of the roaming session by the first modem **(101),** once the second modem **(102)** establish the local session within the at least visited mobile network.

11. The method of claim 9 or 10, further comprising a transferring step through the second modem **(102)** of a challenge message from the at least visited mobile network to the SIM proxy module **(106),** to authenticate the remote second SIM card during the establishment of the local session.

12. The method of any of claims 9-11, further comprising a transmitting step through the roaming session established by the first modem **(101)** of the challenge message from the at least visited mobile network from the SIM proxy module **(106)** to the remote second SIM card in a central SIM database **(108).**

13. The method of any of claims 9-12, further comprising a transmitting step through the first modem **(101)** of a security response message from the central SIM database **(108)** to the SIM proxy module **(106),** the message being computed by the remote second SIM card in the central SIM database **(108),** in response to the transmitted challenge message.

14. The method of any of claims 9-13, further comprising a transmitting step through the second modem **(102)** of the computed security response message from the SIM proxy module **(106)** to the at least visited mobile network in order to validate the local session.

15. Computer program implemented on a processing unit of a computer, the program including code sections for performing instructions corresponding to the steps of a method according to any of claims 9-14.
